# EUROPEAN PATENT APPLICATION

(11) **EP 4 335 908 A1**
(43) Date of publication of application: **13.03.2024**
(21) Application number: 22194809.4
(22) Date of filing: 09.09.2022
(51) Int. Cl.: C09D 5/00, C09D 5/02, C09D 5/18

(54) **INTUMESCENT COMPOSITION AND USE OF THE INTUMESCENT COMPOSITION TO INCREASE CHAR STABILITY OF COATINGS IN THE EVENT OF FIRE**

(71) Applicant: Hilti Aktiengesellschaft, 9494 Schaan (LI)
(72) Inventor: Farras Gutierrez, Hector, 86507 Oberottmarshausen (DE)
(74) Representative: Hilti Aktiengesellschaft Corporate Intellectual Property

(57) **Abstract**

The present invention relates to a composition for an aqueous intumescent coating comprising an aqueous polymer dispersion, an alkoxy-functional organic polymer containing alkoxy-functional silane groups, an intumescent compound mixture and additional water. Furthermore, the present invention relates to the use of the inventive composition as coating composition to increase char formation and stability of coatings produced from said coating compositions in the event of fire.

## Description

The present invention relates to a composition for an aqueous intumescent coating comprising an aqueous polymer dispersion, an alkoxy-functional organic polymer containing alkoxy-functional silane groups, an intumescent compound mixture and additional water. Furthermore, the present invention relates to the use of the inventive composition as coating composition to increase char stability of coatings produced from said coating compositions in the event of fire.

Compositions which form an insulating layer, also referred to as intumescent compositions, are usually applied to the surface of components to form coatings, to protect said components from fire or against the effects of intense heat, for example because of a fire. Steel constructions are now an integral part of modern architecture, even though they have a decisive disadvantage in comparison with reinforced concrete construction. Above about 500°C, the load-carrying capacity of steel is considerably reduced, i.e. the steel loses its stability and its bearing capacity. A temperature which is critical for the load-bearing capacity of the structure can be reached in approximately just 5-10 minutes depending on the fire load, for example in the case of direct exposure to fire (approximately 1000 °C). It is now the aim of fire protection, in particular of steel fire protection, to extend the period of time before the steel structure loses load-bearing capacity in the event of a fire, in order to save lives and valuable property.

In the building regulations of many countries, appropriate fire resistance durations are required for certain steel structures. They are defined as so-called F-class, such as F 30, F 60, F 90 (fire resistance classes according to DIN 4102-2) or American classes according to ASTM etc. According to DIN 4102-2, for example, F 30 means that, in the event of fire under normal conditions, a supporting steel structure must withstand the fire for at least 30 minutes. This is usually achieved by delaying the heating rate of the steel, for example, by coating the steel structure with intumescent coatings. These includes coatings whose components form a solid microporous carbon foam in the event of fire. In this case, this forms a fine-pored and thick foam layer, the so-called char, which, depending on the composition, is highly thermally insulating, and thus the heating of the component is delayed, so that the critical temperature of about 500°C is reached at the earliest after 30, 60, 90, 120 minutes or up to 240 minutes. The thickness of the applied coating layer, or the char developing therefrom, is crucial to attaining the required fire resistance duration. Closed profiles, such as pipes with comparable solidity, require about twice the amount compared to open profiles, such as beams with a double-T profile. For the required fire resistance times to be achieved, the coating must have a certain thickness and can form a voluminous, and thus good insulating, char as possible when exposed to heat and which remains mechanically stable over the period of exposure to fire.

Nowadays, a coating must not only have functional properties, such as sufficient fire resistance as described before, but must also meet increasingly high aesthetic demands.

EP 3 945 118 A1 discloses a composition based on a binder system comprising an aqueous polymer dispersion, an alkoxy-functional organic polymer containing alkoxy-functional silane groups, and an intumescent compound mixture. Inorganic fibers and/or inorganic char reinforcing agents are used to ensure sufficient char formation and stability in the event of fire. However, such fibers and/or char reinforcing agents may have a negative impact on the coating appearance once the coating is applied to a surface. For example, it is known that the use of fibers leads to a roughening of the surface.

Accordingly, there remains a general desire for improvement of the optical appearance of coatings without compromising the functional properties of the coating.

Thus, an object of the present invention is to provide an intumescent coating composition which allows sufficient char formation and char stability in the event of fire, and which may reduce or even negate the use of inorganic fibers and/or reinforcing agents to improve coating appearance once the coating composition is applied to a surface.

Surprisingly, it was found that the problem underlying the invention is solved by an intumescent coating composition according to claim 1. Further embodiments of the invention are outlined in dependent claims and throughout the description.

Subject of the invention is a composition for an intumescent coating composition comprising:
(A) a binder system, comprising
   (a1) an aqueous polymer dispersion; and
   (a2) an alkoxy-functional organic polymer, which contains an alkoxy-functional silane group having the general formula (I), terminated and/or as side group along the polymer chain,

      -Si(R¹)ₘ(OR²)₃₋ₘ (I),

      in which
      R¹ represents a linear or branched C₁-C₁₆ alkyl group,
      R² represents a linear or branched C₁-C₆ alkyl group, and
      m is a whole number from 0 to 2; and
(B) an intumescent composition,
(C) additional water, not including the water of the aqueous polymer dispersion,
wherein the total amount of additional water in the coating composition is 4 to 15 wt.-% and the amount of polymer resulting from the aqueous polymer dispersion is 12 to 20 wt.-%, with reference to the total weight of the composition.

For a better understanding of the invention, the following explanations of the terminology used herein are considered useful. In the sense of the invention:
- *"chemical intumescence"* means the formation of a voluminous, insulating char layer by means of compounds coordinated with one another, which react with one another when acted on by heat;

- *"insulation-layer-forming"* that in the event of a fire, a firm micro-porous carbon foam is formed, so that the fine-pore and thick foam layer that is formed, called the char, insulates a substrate against heat, depending on the composition;
   - a *"carbon donor"* is an organic compound that leaves a carbon skeleton behind due to incomplete combustion, and does not combust completely to form carbon dioxide and water (carbonization); these compounds are also called *"carbon-skeleton-forming agents";*
   - an *"acid-forming agent'* is a compound that forms a non-volatile acid under the effect of heat, i.e. above about 150 °C, for example by decomposition, and thereby acts as a catalyst for carbonization; furthermore, it can contribute to lowering of the viscosity of the melt of the binder; the term *"dehydrogenation catalyst'* is used as an equivalent;
   - a *"gas-forming agent'* is a compound that decomposes at elevated temperature, with the development of inert, i.e. non-combustible gases, and, if applicable, expands the plasticized binder to form a foam (intumescence);
   - a *"char stabilizer"* is what is called a skeleton-forming compound, which stabilizes the carbon skeleton (char), which is formed from the interaction of the carbon formation from the carbon source and the gas from the gas-forming agent. The fundamental method of effect in this regard is that the carbon layers that form, and are actually very soft, are mechanically solidified by inorganic compounds. The addition of such a char stabilizer contributes to significant stabilization of the intumescence crust in the event of a fire because these additives increase the mechanical strength of the intumescent layer and/or prevent it from dripping off.

### Binder system (A)

The composition according to the invention comprises a binder system. Said binder system contains two different binders, one of which is an aqueous copolymer dispersion, and the other is a reactive system, which cures upon contact with water.

### aqueous polymer dispersion (a 1)

One part of the binder system is a polymeric binder which polymeric binder is used along with water as a carrier in the form of an aqueous polymer dispersion (a1).

According to the invention the amount of the (co)polymer resulting from the aqueous polymer dispersion is 12 to 20wt.-%, preferably 13 to 19 wt.-%, with reference to the total weight of the whole composition. Usually, the aqueous polymer dispersion contains 45 to 55 wt.-% of polymer. The rest is water and additives, such as stabilizers.

In one embodiment the polymer dispersion (a1) is based on a single polymer.

In another embodiment, the polymer dispersion (a1) is based on a copolymer. Thus, in said case the aqueous polymer dispersion is also called aqueous copolymer dispersion.

The term (co)polymer dispersion shall encompass both embodiments.

By copolymer herein is meant a copolymer which is obtainable by reacting two or more monomers.

In a preferred embodiment of the aqueous (co)polymer dispersion, the monomers from which the (co)polymer is obtained, are selected from the group consisting of vinyl esters, an α-olefin, and an ester of ethylenically unsaturated carboxylic acids.

By vinyl ester herein is meant any suitable vinyl ester such as those from the group of vinyl esters having 3 to 12 carbon atoms in the carboxylic acid radical, such as vinyl propionate, vinyl laurate, vinyl esters of alpha-branched carboxylic acids having 8 to 11 carbon atoms such as VeoVa^{®}EH, VeoVa^{®}9 or VeoVa^{®}10. Also suitable are methacrylic esters or acrylic esters of unbranched or branched alcohols having 1 to 15 carbon atoms, such as methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate. Also suitable are vinyl halides such as vinyl chloride.

### By α-olefin herein is meant any suitable α-olefin such as ethylene, styrene, or vinyl chloride and the like

By ester of ethylenically unsaturated carboxylic acids herein is meant any suitable ester of ethylenically unsaturated carboxylic acids such as esters of acrylic acid, methacrylic acid, fumaric acid, and maleic acid; ethylenically unsaturated carboxamides and carbonitriles, preferably acrylamide and acrylonitrile; monoesters and diesters of fumaric acid and maleic acid such as the diethyl and di-isopropyl esters, and also maleic anhydride, ethylenically unsaturated sulfonic acids and/or their salts, preferably vinylsulfonic acid, 2-acrylamido-2-methyl-propanesulfonic acid. Further examples are pre-crosslinking comonomers such as polyethylenically unsaturated comonomers, as for example divinyl adipate, diallyl maleate, allyl methacrylate or triallyl cyanurate, or post-crosslinking comonomers, as for example acrylamidoglycolic acid (AGA), methylacrylamidoglycolic acid methyl ester (MAGME), N-methylolacrylamide (NMA), N-methylolmethacrylamide (NMMA), N-methylolallylcarbamate, alkyl ethers such as the isobutoxy ether or esters of N-methylolacrylamide or of N-methylolmethacrylamide and of N-methylolallylcarbamate. Also suitable are monomers with hydroxyl or carboxyl groups, such as, for example, methacrylic and acrylic hydroxyalkyl esters such as hydroxyethyl, hydroxypropyl or hydroxybutyl acrylate or methacrylate, and 1,3-dicarbonyl compounds such as acetoacetoxyethyl acrylate, acetoacetoxypropyl methacrylate, acetoacetoxyethyl methacrylate, acetoacetoxybutyl methacrylate, 2,3-di(acetoacetoxy)propyl methacrylate, and allyl acetoacetate. Preferred are acrylic monomers.

By acrylic monomer herein is meant any suitable alkyl(alk)acrylate or (alk)acrylic acid such as methyl methacrylate, ethyl methacrylate, methyl acrylate, ethyl acrylate, methacrylic acid or acrylic acid, n-butyl acrylate, iso-butyl acrylate, t-butyl acrylate, n-butyl methacrylate, iso-butyl methacrylate, t-butyl methacrylate, 2-ethylhexyl methacrylate, 2-ethylhexyl acrylate, lauryl methacrylate, lauryl acrylate, cyclohexyl acrylate, cyclohexyl methacrylate, isobornyl acrylate, isobornyl methacrylate; hydroxyl-functional acrylates such as 2-hydroxyethyl methacrylate, hydroxypropylethyl methacrylate, 2-hydroxyethyl acrylate, or hydroxypropyl acrylate; and mixtures thereof.

In a preferred embodiment of the invention the copolymer is obtainable by reacting
(i) at least one vinyl ester and at least one ester of an ethylenically unsaturated carboxylic acid, or
(ii) at least one vinyl ester and at least one α-olefin, or
(iii) at least one α-olefin and at least one ester of an ethylenically unsaturated carboxylic acid.

Preferably, the vinyl ester in (i) and (ii) is a combination of a first vinyl ester and a second vinyl ester, which second vinyl ester is different from the first vinyl ester.

In one embodiment the first vinyl ester is selected from the group consisting of vinyl acetate, vinyl propionate and vinyl laurate.

In a further embodiment the second vinyl ester is a vinyl ester of neoalkanoic acid. Said vinyl ester of neoalkanoic acid is preferably one of formula (I) 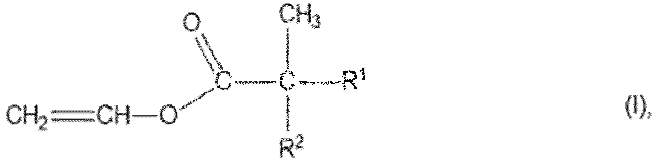 wherein R¹ and R² are alkyl groups, which together contain 6 to 8 carbon atoms.

VeoVa^{®} neoalkanoic vinyl esters are available from Hexion Specialty Chemicals of Columbus, Ohio. In VeoVa^{®}9, R¹ and R² together contain about 6 carbon atoms. In VeoVa^{®}10, R¹ and R² together contain about 7 carbon atoms. In VeoVa^{®}11, R¹ and R² together contain about 8 carbon atoms.

According to the invention the α-olefin is most preferably selected from the group consisting of ethylene, vinyl chloride, and styrene.

According to the invention, the ester of ethylenically unsaturated carboxylic acids is most preferably selected from C₁-C₁₂-alkyl (meth)acrylates.

In a preferred embodiment of the invention the copolymer is obtainable by reacting:
(i) at least one vinyl ester and at least one ester of an ethylenically unsaturated carboxylic acid, for example a vinyl acetate-VeoVa^{®}10-acrylate copolymer; or
(ii) at least one vinyl ester and at least one α-olefin, for example a vinyl acetate, ethylene and vinyl ester terpolymer; or
(iii) at least one α-olefin and at least one ester of an ethylenically unsaturated carboxylic acid, for example a styrene-acrylic copolymer.

The polymeric binder is preferably incorporated into the composition as an aqueous dispersion. Such dispersion typically comprises particles of the polymer suspended in water which coalesce on drying to form the polymeric binder.

### alkoxy-functional organic polymer (a2)

The composition comprises, as part of the polymeric binder, an alkoxy-functional organic polymer (a2), which contain alkoxy-functional silane groups having the general formula (I), terminated and/or as side groups along the polymer chain,

-Si(R¹)ₘ(OR²)₃₋ₘ (I),

in which
R¹ represents a linear or branched C₁-C₁₆ alkyl group,
R² represents a linear or branched C₁-C₆ alkyl group, and
m is a whole number from 0 to 2.

The alkoxy-functional organic polymer, which contains alkoxy-functional silane groups having the general formula (I), terminated and/or as side group along the polymer chain is herein also referred to as silane-terminated polymer.

The alkoxysilane-functional polymer comprises a basic skeleton that is selected from the group consisting of an alkyl chain, polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, such as polyethylene or polypropylene, polyisobutylene, polysulfide, natural rubber, neoprene, phenolic resin, epoxy resin, melamine. In this regard, the basic skeleton can have a linear or branched structure (linear basic skeleton with side chains along the chain of the basic skeleton) and contains alkoxy-functional silane groups, preferably at least two alkoxy-functional silane groups, in a terminating position, i.e. as the end groups of a linear basic skeleton or as the end groups of the linear basic skeleton and as the end groups of the side groups. Preferably, the basic skeleton consists of polyether, polypropylene glycol or polyurethane.

The alkoxy-functional silane groups have the general Formula (I)

-Si(R¹)ₘ(OR²)₃₋ₘ (I),

in which R¹ stands for a linear or branched C₁-C₁₆ alkyl radical, preferably for a methyl or ethyl radical, R² stands for a linear or branched C₁-C₆ alkyl radical, preferably for a methyl or ethyl radical, and m stands for a whole number from 0 to 2, preferably 0 or 1.

Preferably, the alkoxy-functional silane groups are bound to the basic skeleton by way of a group such as a further, different functional group (X = e.g. -S-, -OR, -NHR, -NR₂), which either itself can function as an electron donor or contains an atom that can function as an electron donor, wherein the two functional groups, i.e. the further functional group and the alkoxy-functional silane groups are connected with one another by way of a methylene bridge or a propylene bridge (-X-CH₂-Si(R¹)ₘ(OR²)₃₋ₘ or (-X-C₃H₆-Si(R¹)ₘ(OR²)₃₋ₘ).

Most preferably, the alkoxysilane-functional polymers are polymers in which the basic skeleton is terminated by way of a urethane group with silane groups, such as, for example dimethoxy(methyl)silylmethylcarbamate-terminated polyethers and polyurethanes, dimethoxy(methyl)silylpropylcarbamate-terminated polyethers and polyurethanes, trimethoxysilylmethylcarbamate-terminated polyethers and polyurethanes, trimethoxysilylpropylcarbamate-terminated polyethers and polyurethanes or mixtures thereof.

Examples of suitable polymers comprise silane-terminated polyethers (e.g. Geniosil^{®} STP-E 10, Geniosil^{®} STP-E 15, Geniosil^{®} STP-E 30, Geniosil^{®} STP-E 35, Geniosil^{®} XB 502, Geniosil^{®} WP 1 from Wacker Chemie AG, Polymer ST61, Polymer ST75 and Polymer ST77 from Evonik Hanse), and silane-terminated polyurethanes (Desmoseal^{®} S XP 2458, Desmoseal^{®} S XP 2636, Desmoseal^{®} S XP 2749, Desmoseal^{®} S XP 2821 from Bayer, SPUR+*1050MM, SPUR+*1015LM, SPUR+* 3100HM, SPUR+* 3200HM from Momentive).

The viscosity of these alkoxysilane-functional polymers preferably lies between 0.1 and 50,000 Pa·s, more preferably between 0.5 and 35,000 Pa·s, and most preferably between 0.5 and 30,000 Pa·s.

The viscosity was determined using a Kinexus rotation rheometer, by measuring a flow curve at +23 °C; the values indicated are the measured value at 215 s⁻¹.

As alternative polymers, preferably those in which the alkoxy-functional silane groups are not terminally installed into the skeleton of the polymer but rather distributed, in targeted manner, in side positions over the chain of the basic skeleton, can preferably be used. Important properties, such as the crosslinking density, can be controlled by way of the installed multiple crosslinking units. Here, the product line TEGOPAC^{®} from Evonik Goldschmidt GmbH can be mentioned as a suitable example, such as TEGOPAC^{®} BOND 150, TEGOPAC^{®} BOND 250 and TEGOPAC^{®} SEAL 100. In this connection, reference is made to DE 102008000360 A1, DE 102009028640 A1, DE102010038768 A1, and DE 102010038774 A1 as examples.

Usually, in these alkoxysilane-functional polymers, the polymer carries 2 to 8 alkoxysilane-functional silane groups per prepolymer molecule.

The degree of crosslinking of the binder and thereby both the strength of the resulting coating and its elastic properties can be adjusted as a function of the chain length of the basic skeleton, the alkoxy-functionality of the polymer, and the seat of the alkoxy-functional silane groups.

The total amount of the polymeric compounds, that is, the amount of the polymeric compounds resulting from the alkoxy-functional polymer and the aqueous polymer dispersion usually is 9 to 60 wt.-%, preferably 12 to 35 wt.-%, with reference to the total weight of the composition.

In this context, the amount of the polymer resulting from the alkoxy-functional polymer is 0,01 to 33 wt.-%, preferably 1 to 7 wt.-%, with reference to the total weight of the composition.

To avoid reaction between the water of the aqueous copolymer dispersion and the alkoxy-functional organic polymer, the aqueous copolymer dispersion and the alkoxy-functional organic polymer must be stored separately. This means that both components must be packed separately, e.g. in a two- or multi-component packaging, preferably in a two-component packaging.

In a preferred embodiment of the two-component packaging,
- the amount of the (co)polymer in the component, which contains the aqueous polymer dispersion, is 12 to 20 wt.-%, preferably 13 to 19 wt.-%, with reference to the total weight of the component containing the aqueous polymer dispersion; and
- the amount of the polymer in the component, which contains the alkoxy-functional polymer, is 10 to 100 wt.-%, preferably 20 to 99 wt.-%, with reference to the total weight of the component containing the alkoxy-functional polymer.

In said two-component packaging the weight ratio between the component containing the aqueous polymer dispersion to the component containing the alkoxy-functional polymer is from 100:1 to 1:1.

### Intumescent composition (B)

According to the invention, the composition contains an intumescent composition, wherein the composition can comprise both one individual compound or a mixture of multiple compounds.

It is practical if, as an intumescent composition, a compound is used that acts by means of the formation of an expanded insulating layer that forms under the effect of heat, composed of a material with low flammability, which protects the substrate from overheating and thereby prevents or at least delays a change in the mechanical and static properties of supporting structural parts. The formation of a voluminous insulating layer, namely a char layer, can be formed by means of the chemical reaction of a mixture of corresponding compounds, coordinated with one another, which react with one another under the effect of heat. Such systems are known to a person skilled in the art by the term chemical intumescence and can be used according to the invention.

For the formation of an intumescent layer by means of chemical intumescence, at least three components are generally required, a carbon supplier, a dehydrogenation catalyst, and a gas-forming agent, which are contained in a binder in the case of coatings, for example. Under the effect of heat, the binder plasticizes, and the compounds are released, so that they react with one another, in the case of chemical intumescence. The acid that serves as the catalyst for carbonization of the carbon supplier is formed from the dehydrogenation catalyst, by means of thermal decomposition. At the same time, the gas-forming agent decomposes, forming inert gases that brings about expansion of the carbonized (charred) material and, if applicable, the plasticized binder, causing the formation of a voluminous, insulating foam.

In an embodiment of the invention in which the insulating layer is formed by means of chemical intumescence, the insulation-layer-forming additive comprises at least one carbon-skeleton-forming agent, if the binder cannot be used as such, at least one acid-forming agent, at least one gas-forming agent, and at least one inorganic skeleton-forming agent.

In case the binder itself can be used as a carbon-skeleton-forming agent, the intumescent composition (B) comprises at least one acid-forming agent and at least one gas-forming agent. Optionally, to increase the stability of the char, the intumescent composition can contain additionally at least one inorganic skeleton-forming agent. Even if the binder itself can serve as a carbon-skeleton-forming agent, an additional carbon-skeleton-forming agent can additionally be added to the intumescent composition.

The components of the intumescent composition are particularly selected in such a manner that they can develop synergy, wherein some of the compounds can fulfill multiple functions.

Compounds usually used in intumescent fire-protection agents and known to a person skilled in the art are possible carbon suppliers, such as compounds similar to starch, for example starch and modified starch, and/or multivalent alcohols (polyols), such as saccharides and polysaccharides and/or a thermoplastic or duroplastic polymer resin binder, such as a phenolic resin, a urea resin, a polyurethane, polyvinyl chloride, poly(meth)acrylate, polyvinyl acetate, polyvinyl alcohol, a silicone resin and/or a natural rubber. Suitable polyols are polyols from the group of sugar, pentaerythrite, dipentaerythrite, tripentaerythrite, polyvinyl acetate, polyvinyl alcohol, sorbitol, EO-PO-polyols. Preferably, pentaerythrite, dipentaerythrite or polyvinyl acetate are used.

It should be mentioned that in the event of a fire, the binder itself can also have the function of a carbon supplier.

Compounds usually used in intumescent fire-protection formulations and known to a person skilled in the art are possible dehydrogenation catalysts or acid-forming agents, such as a salt or an ester of an inorganic, non-volatile acid, selected from among sulfuric acid, phosphoric acid or boric acid. Essentially, compounds containing phosphorus are used; their palette is very large, because they extend over multiple oxidation stages of phosphorus, such as phosphines, phosphine oxides, phosphonium compounds, phosphates, elemental red phosphorus, phosphites, and phosphates. The following examples of phosphoric acid compounds can be mentioned: mono-ammonium phosphate, di-ammonium phosphate, ammonium phosphate, ammonium polyphosphate, melamine phosphate, melamine resin phosphate, potassium phosphate, polyol phosphates such as pentaerythrite phosphate, glycerin phosphate, sorbite phosphate, mannite phosphate, dulcite phosphate, neopentyl glycol phosphate, ethylene glycol phosphate, dipentaerythrite phosphate, and the like. Preferably, a polyphosphate or an ammonium polyphosphate is used as a phosphoric acid compound. In this regard, melamine resin phosphates are understood to be compounds such as the reaction products of Lamelite C (melamine/formaldehyde resin) with phosphoric acid. The following examples of sulfuric acid compounds can be mentioned: ammonium sulfate, ammonium sulfamate, nitroaniline bisulfate, 4-nitroaniline-2-sulfonic acid and 4,4-dinitrosulfanilamide and the like. Melamine borate can be mentioned as an example of a boric acid compound.

Possible gas-forming agents are the compounds usually used in fire-protection agents and known to a person skilled in the art, such as cyanuric acid or isocyanic acid and their derivatives, melamine and its derivatives. Such compounds are cyanamide, dicyanamide, dicyandiamide, guanidine and its salts, biguanide, melamine cyanurate, cyanic acid salts, cyanic acid esters and amide, hexamethoxymethyl melamine, dimelamine pyrophosphate, melamine polyphosphate, melamine phosphate. Preferably, hexamethoxymethyl melamine or melamine (cyanuric acid amide) is used.

Furthermore, components that do not restrict their method of action to a single function, such as melamine polyphosphate, which acts both as an acid-forming agent and as a gas-forming agent, are suitable. Further examples are described in GB 2 007 689 A1, EP 139 401 A1, and US 3,969,291 A1.

Although char stabilizer in form of fibers and/or reinforcing agents may be present in the composition according to the invention, but their presence is not required to obtain a hard char. Therefore, it is preferred that the composition according to the present invention does not contain any char stabilizer in form of fibres and/or reinforcing agents. The term fibers describe preferably inorganic fibers selected from the group consisting of glass fibers, mineral fibers and ceramic fibers. Fibers can also include high thermal stable organic fibers such as polyacrylonitrile based carbon fibers. The term reinforcing agent relates preferably to any kind of clay, preferably china clay.

However, if char stabilizers are used in the composition, these are preferably selected from particulate metals, such as aluminum, magnesium, iron, and zinc. Alternatively or additionally, an oxide or a compound of a metal from the group comprising aluminum, magnesium, iron or zinc can be used as an char stabilizer, particularly iron oxide, preferably iron trioxide, titanium dioxide, a borate, such as zinc borate and/or a glass frit composed of glass types having a low melting point, with a melting temperature of preferably at or above 400 °C, phosphate or sulfate glass types, melamine poly-zinc-sulfates, ferroglass types or calcium boron silicates.

In addition, char stabilizers such as melamine phosphate or melamine borate can be contained.

The intumescent composition can be contained in the composition in an amount of 30 to 99 wt.-%, with reference to the total composition, wherein the amount essentially depends on the application form of the composition (spraying, brushing, and the like). To bring about the highest possible intumescence rate, the proportion of the intumescent composition in the total formulation is set to be as high as possible. Preferably, its proportion in the total formulation amounts to 35 to 85 wt.-%, and particularly preferably 40 to 85 wt.-%.

### Additional Water (C)

According to the invention, the composition contains in addition to the water of the aqueous polymer dispersion (a) additional water as a further crosslinking agent for the alkoxy-functional organic polymer to allow curing regardless of the environmental conditions. In this way, more homogeneous and faster curing of the binder can be achieved. Curing of the composition therefore becomes independent of the absolute humidity in the air, and the composition cures reliably and quickly, even under extremely dry conditions.

According to the invention the amount of additional water, not including the water of the aqueous polymer dispersion, is 4 to 15 wt.-%, with reference to the total weight of the composition.

The total amount of water in the component containing the aqueous polymer dispersion depends on the amount of the dispersion and the amount of the water in the dispersion. Together with the amount of water, which is introduce by the aqueous polymer dispersion, the total amount of water in the WB component is preferably 15 to 45 wt.-%, with reference to the total weight of the component containing the aqueous polymer dispersion.

To avoid reaction between the water of the aqueous copolymer dispersion and the alkoxy-functional organic polymer, the aqueous copolymer dispersion together with the optionally contained additional water and the alkoxy-functional organic polymer must be stored separately. This means that both components must be packed separately, e.g. in a two- or multi-component packaging.

The weight ratio of the polymer resulting from the aqueous polymer dispersion to the polymer resulting from the alkoxy-functional polymer is in the range of 0.08:1 to 267:1, preferably in the range of 1.5:1 to 10:1.

### Further components

Aside from the additional water (C) as main crosslinking agent, the composition can contain further crosslinking agents, other than water. These are referred to as co-crosslinking agents herein. Different properties, such as adhesion to the substrate, better wetting of the additives, and curing speed of the composition can be optimized in targeted manner and customized by means of the co-crosslinking agent.

Suitable co-crosslinking agents are selected from the group of basic silane-functional compounds, for example amino silanes, such as aminopropyltrimethoxysilane, aminopropyltriethoxysilane, aminopropylmethyldimethoxysilane, aminopropylmethyldiethoxysilane, *N*-(2-aminoethyl)-aminopropyltrimethoxysilane, N-(2-aminoethyl)aminopropyltrimethoxysilane, *N*-(2-aminoethyl)-aminopropyltriethoxysilane, *N*-(2-aminoethyl)-aminopropyl-methyldimethoxysilane, *N-*cyclohexylaminomethyltriethoxysilane, *N*-cyclohexyl-aminomethyl-methyldiethoxysilane, *N*-cyclohexylaminomethyl-trimethoxysilane, *N-*cyclohexylaminomethy-1-methyldimethoxysilane.

These co-crosslinking agents are preferably contained in an amount of 0 to 5.0 wt.-%, with reference to the total composition, more preferably of 0.1 to 3.0 wt.-%, and most preferably of 0.5 to 2.0 wt.-%. The inventor found out that below 1% there is no significant restriction on pot life, but an amount of crosslinker of more than 1% leads to a significant increase in curing speed.

For the alkoxysilane-functional polymer and the crosslinking agent not to be brought prematurely into contact with one another and curing to be initiated prematurely, it is practical if these are separated from one another, to inhibit a reaction.

### Catalyst

In a preferred embodiment, the composition contains at least one catalyst for the curing of the silane-terminated polymer. All compounds that are suitable for catalyzing the formation of the Si-O-Si-bonds between the silane groups of the polymers can be used as catalysts. As examples, metal compounds, such as titanium compounds, tin compounds can be mentioned. Alternatively, acidic or basic catalysts can be mentioned.

Among the titanium compounds, titanate esters are preferred, such as tetrabutyltitanate, tetrapropyltitanate, tetraisopropyltitanate, tetraacetylacetonate-titanate.

Among the metal compounds as catalysts, organo-aluminum compounds or reaction products of bismuth salts or chelate compounds, such as zirconium tetracetylacetonate, can be mentioned.

Among the tin compounds, dibutyl tin dilaurate, dibutyl tin maleate, dibutyl tin diacetate, dibutyl tin dioctanoate, dibutyl tin acetylacetonate, dibutyl tin oxide, or corresponding compounds of dioctyl tin, tin naphthenate, dimethyl tin dineododecanoate, reaction products of dibutyl tin oxide, and phthalic acid esters are preferred.

Since some of these catalysts are problematical regarding their toxicity, catalysts that do not contain metals, such as acidic or basic catalysts, are preferred.

Phosphoric acid or phosphoric acid esters, toluene sulfonic acids, and mineral acids can be mentioned as examples of acidic catalysts.

Solutions of simple bases such as NaOH, KOH, K₂CO₃, ammonia, Na₂CO₃, aliphatic alcoholates or K-phenolate can be mentioned as examples of basic catalysts.

Particularly preferably, the catalyst is selected from among the group of organic amines, such as triethylamine, tributylamine, trioctylamine, monoethanolamine, diethanolamine, triethanolamine, triisopropanolamine, tetramethylene diamine, Quadrol, diethylene triamine, dimethylaniline, Proton Sponge, *N*,*N*'-bis[2-(dimethylamino)ethyl]-N,N'-dimethylethylene diamine, *N*,*N*-dimethylcyclohexylamine, *N*-dimethylphenlyamine, 2-methylpentamethylene diamine, 2-methylpentamethylene diamine, 1,1,3,3-tetramethylguanidine, 1,3-diphenylguanidine, benzamidine, *N*-ethylmorpholine, 2,4,6-tris(dimethylaminomethyl)phenol (TDMAMP); 1,8-diazabicyclo[5.4.0]undec-7-ene (DBU), and 1,5-diazabicyclo(4.3.0)non-5-ene (DBN); n-pentylamine, n-hexylamine, di-n-propylamine, and ethylene diamine; DABCO, DMAP, PMDETA, imidazol and 1-methylimidazol or salts of amines and carboxylic acids, and polyetheramines, such as polyethermonoamines, polyetherdiamines or polyethertriamines, such as, for example, the Jeffamines of Huntsman and ether amines, such as, for example, the Jeffkats of Huntsman. In this regard, reference is made to the patent applications WO 2011/157562 A1 and WO 2013/003053 A1.

The type and the amount of the catalyst are selected as a function of the selected alkoxysilane-functional polymer and the desired reactivity.

### Additives

In a further embodiment, the composition according to the invention furthermore contains at least one further constituent, selected from among plasticizers, water scavengers, organic and/or inorganic admixtures and/or further additives.

The plasticizer has the task of plasticizing the cured polymer network. Furthermore, the plasticizer has the task of introducing an additional liquid component, so that the fillers are completely wetted, and the viscosity is adjusted in such a manner that the coating becomes processable using a spray device. The plasticizer can be contained in the formulation in such an amount that it can sufficiently fulfill the functions just described.

Preferably the plasticizer is selected from among derivatives of benzoic acid, phthalic acid, e.g. phthalates, such as dibutylphthalate, dioctylphthalate, dicyclohexylphthalate, diisooctylphthalate, diisodecylphalate, dibenzylphthalate or butylbenzylphthalate, trimellitic acid, pyromellitic acid, alkane diacid, such as butyric acid, glutaric acid, pimelic acid, adipic acid, suberic acid, azelaic acid, sebacic acid, fumaric acid, maleic acid, itaconic acid, caprylic acid and citric acid, ricinoleic acid, phosphates, alkylphosphate esters, and derivatives of polyesters and polyethers, glycol ethers and glycol esters, epoxy-enhanced oils, sulfonamides, terpenes, oils and derivatives thereof, such as soybean oil, C₁₀-C₂₁ alkylsulfonic acid esters of phenol, alkanes, cycloalkanes, and alkyl esters. More preferably, the plasticizer is selected from an ester derivative of terephthalic acid, a triol ester of caprylic acid, a glycol diester, diol esters of aliphatic dicarboxylic acids, ester derivative of citric acid, secondary alkylsulfonic acid ester, ester derivatives of glycerin with epoxy groups, and ester derivatives of phosphates. Most preferably, the plasticizer is dioctyladipate, bis(2-ethylhexyl)terephthalate, trihydroxymethylpropylcaprylate, triethylene glycol-bis(2-ethylhexanoate), 1,2-cyclohexane dicarboxylic acid diisononyl ester, a mixture of 75 to 85 % secondary alkylsulfonic acid esters, 15 to 25 % secondary alkane disulfonic acid diphenylesters, as well as 2 to 3 % non-sulfonated alkanes, triethylcitrate, epoxy-enhanced soybean oil, tri-2-ethylhexylphosphate or a mixture of n-octylsuccinate and n-decylsuccinate. Examples of this are Plastomoll^{®} DOA, Eastman^{®} (TM) DOTP Plasticizer (Eastman), Esterex NP 343 (Exxon Mobil), Solusolv^{®} 2075 (Butvar), Hexamoll^{®} DINCH (BASF), Mesamoll^{®} II (Lanxess), triethylcitrate (Sigma Aldrich), PARAPLEX^{®} G-60 (Hallstar), Disflammol^{®} TOF (Lanxess), and Uniplex LXS TP ODS (Lanxess).

In the composition, the plasticizer can preferably be contained in an amount of 0 to 40 wt.-%, more preferably 0.2 to 25 wt.-%, and even most preferably 1 to 20 wt.-%, with reference to the total composition.

To prevent a premature reaction with residual moisture of the fillers used or of the humidity in the air, water scavengers are usually added to the composition. Preferably, the water scanvenger is an organo-functional alkoxysilane or an oligomer organo-functional alkoxysilane, more preferably a vinyl-functional silane, an oligomer vinyl-functional silane, a vinyl-/alkyl-functional silane, an oligomer amino-/alkyl-functional silane, an acetoxy-/alkyl-functional silane, an amino-functional silane, an oligomer amino-functional silane, a carbamatosilane or a methacryloxy-functional silane. Most preferably, the water scavenger is di-*tert*-butoxydiacetoxysilane, bis(3-triethoxysilylpropyl)amine, bis(3-trimethoxypropyl)amine, 3-aminopropylmethyldiethoxysilane, 3-aminopropyltriethoxysilane, vinyl triethoxysilane, vinyl trimethoxysilane, vinyl tris(2-methoxyethoxy)silane, *N*-cyclohexylaminomethyl triethoxysilane, vinyldimethoxymethyl silane, vinyltriacetoxysilane, 3-methacryloxypropyl trimethoxysilane, methacryloxymethyl-methyldimethoxysilane, methacryloxymethyl trimethoxysilane, 3-methacryloxypropyl triacetoxysilane, *N*-methyl[3-(trimethoxysilyl)propyl]carbamate, *N*-trimethoxysilylmethyl-*O*-methylcarbamate, *N-*dimethoxy(methyl)silyl-methyl-*O*-methylcarbamate or combinations thereof.

Examples of this are Dynasylan^{®} 1146, Dynasylan^{®} 6490, Dynasylan^{®} 6498, Dynasylan^{®} BDAC, Dynasylan^{®} 1122, Dynasylan^{®} 1124, Dynasylan^{®} 1133, Dynasylan^{®} 1204, Dynasylan^{®} 1505, Dynasylan^{®} 1506, Dynasylan^{®} AMEO, Dynasylan^{®} AMEO-T, Dynasylan^{®} VTEO, Dynasylan^{®} VTMO, Dynasylan^{®} VTMOEO, Dynasylan^{®} 6598 (Evonik), Geniosil^{®} XL 926, Geniosil^{®} XL 10, Geniosil^{®} XL 12, Geniosil^{®} GF 56, Geniosil^{®} GF 62, Geniosil^{®} GF 31, Geniosil^{®} XL 32, Geniosil^{®} XL 33, Geniosil^{®} GF 39, Geniosil^{®} GF 60, Geniosil^{®} XL 63, and Geniosil^{®} XL 65 (Wacker).

These water scavengers are preferably contained in an amount of 0 to 5 wt.-%, with reference to the total composition, more preferably of 0.01 to 3 wt.-%, and most preferably of 0.05 to 2 wt.-%.

Optionally, one or more reactive flame inhibitors can be added to the composition according to the invention as further additives. Such compounds are built into the binder. Examples in the sense of the invention are reactive organophosphorus compounds, such as 9,10-dihydro-9-oxa-10-phosphaphene-anthrene-10-oxide (DOPO) and its derivatives, such as, for example, DOPO-HQ, DOPO-NQ, and adducts.

Additional additives, such as thickeners and/or rheology additives, as well as fillers, can be added to the composition. Preferably, polyhydroxycarboxylic acid amides, urea derivatives, salts of unsaturated carboxylic acid esters, alkylammonium salts of acidic phosphoric acid derivatives, ketoximes, amine salts of p-toluene sulfonic acid, amine salts of sulfonic acid derivatives, as well as aqueous or organic solutions or mixtures of the compounds are used as rheology additives, such as anti-settling agents, anti-runoff agents, and thixotropic agents. In addition, rheology additives based on pyrogenic or precipitated silicic acids or based on silanated pyrogenic or precipitated silicic acids can be used. Preferably, the rheology additives are pyrogenic silicic acids, modified and non-modified sheet silicates, precipitation silicic acids, cellulose ethers, polysaccharides, PU and acrylate thickeners, urea derivatives, castor oil derivatives, polyamides and fatty acid amides and polyolefins, if they are present in solid form, powdered celluloses and/or suspension agents such as xanthan gum, for example.

Aside from the additives already described, the composition can contain usual aids such as wetting agents, for example based on polyacrylates and/or polyphosphates, defoamers, such as silicone defoamers, pigments, fungicides, or diverse fillers, such as vermiculite, inorganic fibers, quarts sand, micro-glass beads, mica, silicon dioxide, mineral wool, and the like, if necessary.

The composition according to the invention is preferably packaged as a multi-component system, preferably a two-component system.

The further constituents of the composition are divided up in accordance with their compatibility with one another and with the compounds contained in the composition and can be contained in one of the two components or in both components. It is practical if the water scavenger and the co-crosslinking agent, if present, are packaged separately from the component that contains the crosslinking agent, particularly water.

Furthermore, the division of the further constituents, particularly of the solid constituents, can depend on the amounts in which these are supposed to be contained in the composition. By means of a corresponding division, a higher proportion, with reference to the total composition, can occur in some cases.

It is also possible that a component contains merely the crosslinking agent, particularly the water. Alternatively, the crosslinking agent, particularly the water, can be contained in a component of the two-component system together with other constituents, such as plasticizers, additives and/or fillers.

In this regard, the intumescent composition can be contained as a total mixture or, divided up into individual components, in one component or multiple components. The division of the fire-protection additive takes place as a function of the compatibility of the compounds contained in the composition, so that neither a reaction of the compounds contained in the composition with one another or reciprocal disruption, nor a reaction of these compounds with the compounds of the other constituents can take place. This is dependent on the compounds used.

The composition is applied to the substrate, particularly metallic substrate, as a paste, using a brush, a roller or by means of spraying. Preferably, the composition is applied by means of an airless spraying method.

The curing properties and the properties of the dried (cured) composition can be controlled by way of the water content in the composition. This is particularly very important if the coated structural parts must quickly be subjected to stress or processed further, whether by means of coating with a cover layer or movement or transportation of the parts. Also, the coating is therefore clearly less susceptible to external influences at the construction site, such as, for example, impact of (rain) water or dust and dirt, which can lead, in solvent-based or aqueous systems, to water-soluble constituents, such as ammonium polyphosphate, being washed out, or, in the event of dust being absorbed, to reduced intumescence. Because of the low plasticization point of the binder and the high solids proportion, the expansion rate under heat effect is high, even at a low layer thickness.

For this reason, the two-component or multi-component composition according to the invention is suitable as a coating, particularly a fire-protection coating, preferably a sprayable coating for substrates on a metallic and non-metallic basis. The substrates are not restricted and comprise structural parts, particularly steel structural parts and wooden structural parts, but also individual cables, cable bundles, cable runs, and cable ducts or other lines.

The composition according to the invention is used, above all, in the construction sector, as a coating, particularly a fire-protection coating for steel construction elements, but also for construction elements composed of other materials, such as concrete or wood, and as a fire-protection coating for individual cables, cable bundles, cable runs, and cable ducts or other lines.

A further object of the invention is therefore the use of the composition according to the invention as a coating, particularly as a coating for construction elements or structural elements composed of steel, concrete, wood, and other materials, such as plastics, particularly as a fire-protection coating to increase char stability of coatings produced from the inventive coating compositions in the event of fire.

The present invention also relates to objects that are obtained when the composition according to the invention has cured. The objects show excellent appearance properties.

Due to presence of both the aqueous polymer dispersion (a1) and the alkoxy-functional organic polymer (a2) the solids content is higher than in a standard aqueous formulation, up to 80 vol.-%, which in general have at most 70 vol.-% solids content, but the Pigment Volume Concentration (PVC) is lower than in a standard aqueous formulation.

The following examples serve for a further explanation of the invention.

### EXEMPLARY EMBODIMENTS

### Compounds used in the examples:

| **Compound** | **Trade Name** | **Supplier** |
|---|---|---|
| Ethoxysilane lateral groups on poly ether (abbreviated as MS-Copolymer) | Tegopac ^{®} Bond 160 | Evonik Industries AG |
| Vinyltrimethoxysilane (abbreviated as MS-Water scavenger) | Dynasylan^{®} VTMO | Evonik Industries AG |
| Vinylester/ ethylene/vinyl acetate terpolymer copolymer dispersion (abbreviated as Copolymer Dispersion) | Vinnapas EZ3112 | Wacker |
| Hydroxyethylcellulose | Natrosol^{™} 250HHR | Ashland Global Specialty Chemicals Inc |
| Antifoaming agent | Serdas ^{®} DF7010 | Elementis plc |
| Ammonium salt of a polymeric carboxylic acid | NUOSPERSE^{®} FX504 | Elementis plc. |
| Fumed silica | CAB-O-SIL^{®} TS-720 | Cabot Corporation |
| Titanium dioxide | KRONOS^{®} 2056 | Kronos Incorporated |
| Mineral fibres (125 microns) | Roxul^{®} 1000 Rockforce MS603 | ROCKWOOL B.V. |
| Melamine | Melafine^{®} | OCI N.V. |
| Pentaerythritol | Charmor^{™} PM40 | Perstorp AB |
| Ammonium polyphosphate | Exolit^{®} AP 422 | Clariant AG |
| China Clay | Polwhite^{™} E | Imerys S.A. |
| Methylisothiazolinone / Benzisothiazolinone | Acticide MBS | Thor |

### Comparative Example 1 (WB-1)

An aqueous formulation with a vinyl acetate /ethylene/ vinyl ester terpolymer dispersion was prepared. The formulation is based on the copolymer dispersion as the only source of polymer and contains a complete mix of intumescent fillers and fibres (mineral fibres and china clay) to stabilise the char.

### Comparative Example 2 (WB-2)

The formulation is based on WB-1 but replacing the weight from mineral fibres and china clay by additional pentaerythritol and melamine in ratio.

### Formulation 3 (WB-3)

The formulation is based on WB-2 but replacing part of the copolymer dispersion by water.

### Formulation 4 (MS-1)

The formulation is based on an alkoxysilane-based polymer (MS copolymer) as the only polymer. It contains a water scavenger and fumed silica as an anti-settling agent.

The formulations of Comparative Example 1 and 2 as well as the composition of formulations 3 and 4 are shown in Table 1.

**Table 1: Formulation of Comparative Example 1 (WB-1), 2 (WB-2) and 3 (WB-3) as well as of composition of formulation 4 (MS-1). Formulation 4 (MS-1) is used to manufacture examples 11 and 12 according to the invention. All data in weight percentage [wt.-%].**

| | **WB1** | **WB2** | **WB3** | **MS1** |
|---|---|---|---|---|
| **Compound** | | | | |
| MS-Copolymer | - | - | - | 97 |
| MS-Water Scavenger | - | - | - | 0.5 |
| Copolymer Dispersion | 37.63 | 37.51 | 27.51 | - |
| Water | 4.69 | 4.83 | 14.83 | - |
| Hydroxyethylcellulose | 0.10 | 0.13 | 0.13 | - |
| Antifoaming agent | 0.73 | 0.73 | 0.73 | - |
| Ammonium salt of a polymeric carboxylic acid | 0.68 | 0.63 | 0.63 | - |
| Methylisothiazolinone/ Benzisothiazolinone | 0.19 | 0.19 | 0.19 | - |
| Fumed silica | 0.28 | 0.28 | 0.28 | 2.5 |
| Mineral fibers (125 microns) | 1.28 | - | - | - |
| Intumescent mixture (Titanium dioxide/Ammonuimpolyphosphate) | 34,64 | 34,64 | 34,64 | - |
| Melamine | 8.48 | 10.53 | 10.53 | - |
| Pentaerythritol | 8.48 | 10.53 | 10.53 | - |
| China Clay | 2.82 | - | - | - |

**Table 2: Composition of Examples 11 and 12 according to the invention. All data in weight percentage [wt.-%].**

| | **Example 11** | **Example 12** |
|---|---|---|
| WB-2 | 95,0 | - |
| WB-3 | - | 95,0 |
| MS-1 | 5,0 | 5,0 |

### Column tests

Comparative example 1, 2 and examples 11 and 12 were applied at 1.7mm DFT (dry film thickness) onto 1 meter tall H sections (HEA260) thermocoupled on 8 positions. The columns were let dry for 1 month before they were fire tested and the thermal data was evaluated according ASTM E119. Considering the average time to failure, the time to reach 538°C by the average of the thermocouples or the time to reach 649°C by any single thermocouple is considered. Furthermore, the fire curve followed by the furnace in accordance to ASTM E119. The expansion rate and char aspect was also assessed.

To show how the lack of fibres and reinforcing fillers such as china clay weaken the char properties and intumescent efficiency, the comparative example 1 was used as representative reference of a fully reinforced and formulated waterborne intumescent coating and the comparative example 2 was used as the unreinforced waterborne intumescent coating. Examples 11 and 12 prove the effect of adding MS component as reinforcing agent. The results are shown in Tabel 3:

**Table 3: Results of columns fire tests.**

| **Example** | **Time to 538°C by average (min)** | **Time to 649°C by individual thermocouple (min)** | **Expansion rate (times original thickness)** | **Char aspect after fire test** |
|---|---|---|---|---|
| **Comparative Example 1** | 64 | >73 | 35 | Cohesive, crack free |
| **Comparative example 2** | 62 | 54 | 42 | Surface char detachments and crack to steel on one flange edge |
| **Example 11** | 44 | 47 | 25 | Compact char, crack free |
| **Example 12** | 56 | 67 | 20 | Compact char and crack free |

Comparative example 2 has a weaker char formation than Comparative example 1 due to the lack of fibres and china clay, this can be solved by adding MS component (Example 11) but the resulting insulation time is lower due to too high char restriction. Example 12 then, due to a decrease on WB copolymer, proves that a fibre and china clay free formulation can achieve similar fire performance and char properties to comparative example 1 due to the to the addition of a MS component.

The benefits of having a MS component added instead of fibres and inorganic char reinforcing fillers such as china clay are coating appearance (fibres roughen the surface), slight SVR increase and a PVC decrease. The results are shown in Table 4:

**Table 4: Results of SVR and PVC example comparison.**

| | **SVR (%)** | **PVC (%)** |
|---|---|---|
| **Comparative example 1** | 68 | 60 |
| **Comparative example 2** | 69 | 61 |
| **Example 11** | 70 | 57 |
| **Example 12** | 70 | 58 |

Higher SVR is beneficial because it means a lower concentration of volatile compounds (water in this case) and a lower PVC is known to provide a lower risk for long term durability of the film formed by the coating as there is higher concentration of binder in relation to pigments. The absence of fibres also will allow to use smaller nozzles and lower pressures to apply the material by spray applications.

Additionally, to column fire testing flat steel panel tests were also carried out to prove the reinforcing effects of the MS component to the waterborne intumescent coating.

The steel panels were grit blasted panels of 280x280x5mm dimensions which were primed with a compatible epoxy primer at 50 microns DFT. The intumescent coatings according to Comparative Example 1 and 2 as well as Example 11 and 12 were applied at 1.3mm DFT and let to dry at 23°C during 4 weeks before the fire test. The fire test curve was in accordance to ASTM E119 and the time to reach 538°C as well as the char aspect was assessed.

**Table 5: Panel fire test results.**

| | **Time to 538°C (min)** | **Expansion rate** | **Char aspect after test** |
|---|---|---|---|
| **Comparative example 1** | 80 | 15 | Nodular char, cohesive |
| **Comparative example 2** | 85 | n/a* | Char detached during cooling |
| **Example 11** | 63 | 12 | Compact and cohesive |
| **Example 12** | 77 | 14 | Compact and cohesive |

| | | | |
|---|---|---|---|
| *Char detached during cooling of the furnace after test and therefore the expansion rate could not be determined. | | | |

The panel results reflect the same trend as on columns, Examples 11 and 12 proved an improvement on char cohesion due to the MS component and Example 12 proves that the insulation efficiency can reach levels close to Comparative example 1.

## Claims

1. Composition for an aqueous intumescent coating composition comprising:
(A) a binder system, comprising
(a1) an aqueous polymer dispersion; and
(a2) an alkoxy-functional organic polymer, which contains alkoxy-functional silane groups having the general formula (I), terminated and/or as side group along the polymer chain,
-Si(R¹)ₘ(OR²)₃₋ₘ (I),
in which
R¹ represents a linear or branched C₁-C₁₆ alkyl group,
R² represents a linear or branched C₁-C₆ alkyl group, and
m is a whole number from 0 to 2; and
(B) an intumescent composition,
(C) additional water, not including the water of the aqueous polymer dispersion,
wherein the total amount of additional water in the coating composition is 4 to 15 wt.-% and the amount of polymer resulting from the aqueous polymer dispersion is 12 to 20 wt.-%, with reference to the total weight of the composition.

2. Composition according to claim 1, wherein the aqueous intumescent coating composition is free of char stabilizers in form of inorganic and/or high thermal stable organic fibers and/or reinforcing agents.

3. Composition according to claim 2, wherein the char stabilizers are selected from the group consisting of glass fibers, mineral fibers, carbon fibers and ceramic fibers.

4. Composition according to claim 2, wherein the reinforcing agent is any kind of clay, preferably china clay.

5. Composition according to any of the preceding claims, wherein the alkoxy-functional organic polymer a2) comprises a basic skeleton, which is at least one member selected from the group consisting of an alkyl chain, a polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, polyisobutylene, polysulfide, natural rubber, neoprene, phenolic resin, epoxy resin, and melamine.

6. Composition according to claim 5, wherein the basic skeleton is a polyether or a polyurethane.

7. Composition according to any one of the preceding claims, wherein the alkoxysilane-functional polymer a2) contains at least 2 alkoxy-functional silane groups.

8. Composition according to any one of the preceding claims, wherein the polymer dispersion a1) is based on a copolymer.

9. Composition according to claim 8, wherein the copolymer is obtainable by reacting two or more monomers, whereas the monomers are selected from the group consisting of vinyl esters, an α-olefin, and an ester of ethylenically unsaturated carboxylic acids.

10. Composition according to any of the preceding claims, wherein the composition is a two-component composition with a first component and a second component.

11. Use of the composition according to any one of the preceding claims in aqueous intumescent coating compositions to increase char formation and char stability of coatings produced from said coating compositions in the event of fire.

12. Use of the composition according to any one of the preceding claims in aqueous coating compositions to improve optical appearance of coatings produced from said coating compositions.
